**Europäisches Patentamt**

**European Patent Office**

**Office européen des brevets**

(19)

(11) Veröffentlichungsnummer: **0 071 811**
**B1**

(12) **EUROPÄISCHE PATENTSCHRIFT**

(45) Veröffentlichungstag der Patentschrift:
15.10.86

(51) Int. Cl.⁴: **B 65 D 45/00**, F 16 L 23/04,
**B 28 B 1/32**

(21) Anmeldenummer: **82106491.2**

(22) Anmeldetag: **19.07.82**

(54) Wirbelkammerbehälter eines Mörtelanwurfgerätes.

(30) Priorität: **06.08.81 DE 3131173**

(43) Veröffentlichungstag der Anmeldung:
**16.02.83 Patentblatt 83/7**

(45) Bekanntmachung des Hinweises auf die Patenterteilung:
**15.10.86 Patentblatt 86/42**

(84) Benannte Vertragsstaaten:
**AT CH FR GB IT LI SE**

(56) Entgegenhaltungen:
**DE-A-2 759 036**
**DE-B-1 204 072**
**GB-A-2 048 412**
**US-A-2 656 950**
**US-A-4 218 067**

(73) Patentinhaber: **Melchior, Martin Theodor,
Neustrasse 50, D-6639 Rehlingen/Saar (DE)**

(72) Erfinder: **Melchior, Martin Theodor, Neustrasse 50,
D-6639 Rehlingen/Saar (DE)**

(74) Vertreter: **Boecker, Carl Otto, Dipl.- Ing., Dr.
Ehrhardt- Strasse 31, D-6670 St. Ingbert (Saar)
(DE)**

## Beschreibung

Die Erfindung betrifft einen Wirbelkammer-Behälter eines Mörtel-Anwurfgerätes zur Aufbereitung von unter hohem Förderdruck stehendem Mörtel, mit einem Rührwerkzeug in dem Wirbelkammer-Behälter und mit einem Deckel, der mittels Befestigungsmittel mit einem behälterseitigen Ringflansch verbindbar ist. In der DE-C 24 37 231 ist ein Mörtel-Anwurfgerät zum Erzeugen eines luftporenhaltigen Mörtels mit einer Wirbelkammer beschrieben, in die der Mörtel durch eine Schneckenpumpe mit hohem Förderdruck von über 50 bar eingespeist wird. In der Praxis wird der Deckel der Wirbelkammer mit dem Behälterteil verschweißt, weil die übliche Deckelbefestigung mittels eines Schraubenkranzes wegen Bruches von Schrauben nicht betriebssicher war. Hierdurch wird aber der Nachteil in Kauf genommen, daß zum Auswechseln des Rührwerkzeuges die Wirbelkammer aufgeschweißt und mit einem neuen Deckel versehen werden muß.

Es wurde erkannt, daß Befestigungsschrauben durch Abscheren zu Bruch gehen, und dies wiederum aufgrund der Überlegung, daß Deckel von Hochdruckbehältern unter dem hohen Innendruck einer Verformung unterliegen, die zu einer Verringerung des Lochteilkreisdurchmessers für die Schraubendurchgänge führt. Durch diese Durchmesserverringerung des Deckelrandes, die bei jedem Einschalten der Schneckenpumpe auftritt, entstehen in den Befestigungsschrauben Biege- und Scherspannungen, die die Dauerfestigkeit der Schrauben überschreiten, so daß sie nach und nach zu Bruch gehen und schließlich der Deckel explosionsartig abreißt, was zu Unfällen führen kann.

Unter dem Aspekt der Sicherheit ist eine Deckelbefestigung nach der US-A 26 56 950 bekannt geworden, bei der der dünnwandig ausgeführte Deckel von einem äußeren Ringflansch einer Flanschverbindung am Rande eingespannt wird und mit radial verlaufenden Sollbruch-Einschnitten versehen ist. Hierdurch soll der leicht zu ersetzende Deckel bersten, bevor der Behälter durch einen unzulässig hohen Spitzendruck gefährdet wird. Der äußere Ringflansch umgreift einen Ringbund des inneren Ringflansches spielfrei, jedoch hat dies hinsichtlich der Gefährdung der Befestigungsschrauben der Flanschverbindung keine Bedeutung.

Als Befestigungsmittel für Flanschverbindungen sind auch Klemmringe bekannt, die nach außen konvergierende Spannflächen haben und ebenso konvergierende Gegenflächen der Flansche umfassen. Wenn sich bei einer solchen Flanschverbindung mit Klemmring der Deckel unter hohem Behälterdruck aufwölbt, kann sich der deckelseitige Ringflansch im Durchmesser einziehen, so daß der Klemmring seine Spannung zumindest zum Teil verliert.

Auch die US-A 14 82 049 zeigt einen Druckbehälter mit Klemmring-Befestigung, nämlich einen sogenannten Dampfdruck-Kochtopf, bei dem ein Bund des Deckels den oberen Rand des Behälters spielfrei umgreift, allerdings oberhalb eines behälterseitigen Ringvorsprunges, der der unteren Abstützung des geteilten Klemmringes dient. Der obere Behälterrand ist somit nicht versteift, so daß sich auch bei dieser Konstruktion der deckelseitige Ringbund unter hohem Behälterdruck einziehen kann.

Die GB-A 59 36 70 richtet sich speziell auf die Abdichtung eines Dampfdruck-Kochtopfes, bei der der Behälter zwar einen Ringflansch hat, der von einem abwärts gerichteten Bund des Deckels spielfrei und formschlüssig umgriffen wird, wobei ein Klemmring die Deckelbefestigung bewirkt, jedoch stellt sich bei einem Dampfdruck-Kochtopf mit gegenüber einem Mörtel-Anwurfgerät relativ niedrigem Innendruck das gegenständliche Problem nicht. Dampfdruck-Kochtöpfe haben stets ein Sicherheitsventil im Deckel, das einen sehr hohen Innendruck überhaupt nicht aufkommen läßt, der dazu führen könnte, daß der Sitz eines Klemmringes gelockert wird, wenn sich der Deckel unter hohem Innendruck aufwölbt und - hierdurch bedingt - die mit dem Klemmring zusammenwirkenden deckelseitigen Klemmflächen einer Verringerung des Durchmessers unterworfen werden, die zu einer Lockerung des Klemmringes führen könnten.

Von diesen Erkenntnissen und Überlegungen ausgehend hat sich die Erfindung die Aufgabe gestellt, eine Deckelbefestigung für den mit einem Ringflansch versehenen Wirbelkammer-Behälter eines Mörtel-Anwurfgerätes der beschriebenen Art zu schaffen, bei der Verformungen des Deckels durch hohen Innendruck ohne Einfluß auf die Befestigungsmittel sind. Diese Aufgabe wird gemäß der Erfindung dadurch gelöst, daß der Deckel mit einem Bund versehen ist, der den Ringflansch mindestens auf einem Teil seiner Höhe derart formschlüssig umgreift, daß Deckelbund und behälterseitiger Ringflansch unter der aufgrund der Aufwölbung des Deckels unter dem hohen Förderdruck hervorgerufenen Verringerung des Durchmessers des Deckelbundes spielfrei verspannt sind, und das Befestigungsmittel aus einem Kranz von Spannschrauben oder einem geteilten Klemmring besteht.

Die spielfreie Verspannung zwischen Deckelbund und behälterseitigem Ringflansch unter hohem Förderdruck begründet den überraschenden Effekt, daß zwischen Deckelbund und Ringflansch keine Relativbewegung mehr möglich ist.

Die aufgrund einer Aufwölbung des Deckels unter hohem Förderdruck entstehende Ringspannung im Deckelrand wird nämlich von der Steifigkeit des Ringflansches aufgenommen. Selbst wenn in Betracht gezogen wird, daß der Ringflansch sich unter dem Einfluß von Tangentialspannungen im Durchmesser verringert, was von seinem Widerstandsmoment abhängt, so können sich beide Teile höchstens gemeinsam im Durchmesser ändern, d. h. sie unterliegen keiner Relativbewegung. Letztlich wird durch die Erfindung der Weg eröffnet, als Befestigungsmittel - wie bekannt - einen Kranz von Spannschrauben oder einen geteilten Klemmring einzusetzen. In Spannschrauben können keine Biege- und Scherspannungen mehr auftreten, da eine Verringerung des deckelseitigen Lochkreisdurchmessers gegenüber dem behälterseitigen Lochkreisdurchmesser nicht mehr möglich ist.

Die Verspannung zwischen Deckelrand und Ringflansch aufgrund der Tendenz des Deckelrandes, sich bei Auswölbung des Deckels in seinem Durchmesser zu verringern, kann dahingehend genutzt werden, daß auf eine besondere Ringdichtung zwischen Deckel und Behälter verzichtet werden kann. Unter diesem Aspekt ist es empfehlenswert, daß die dem Ringflansch zugewandte Bundfläche sowie die Gegenfläche des Ringflansches nach außen leicht konisch verlaufen. Dies erleichtert auch das Aufsetzen des Deckels.

Nachdem durch die Erfindung erreicht worden ist, daß unabhängig vom Innendruck in dem Virbelkammer-Behälter der Deckelrand und der Ringflansch im Sinne von Durchmesseränderungen ihre Relativlage beibehalten, ist die Voraussetzung dafür geschaffen, daß als Befestigungsmittel auch ein geteilter Klemmring etwa nach der DE-C 10 55 921 verwendet werden kann. Hierzu sieht die Erfindung vor, daß der Ringflansch auf seiner nicht vom Deckelbund umgriffenen Außenfläche einen bis zum Aussendurchmesser des Bundes reichenden Ringvorsprung hat, und daß sowohl die Oberfläche des Deckelrandes als auch die Unterfläche des Ringflansches als nach außen konvergierende Spannflächen für einen geteilten Klemmring verlaufen. Ohne den erfindungsgemäßen Formschluß zwischen Deckelrand und behälterseitigem Ringflansch würde auch ein geteilter Klemmring mit doppelkonischen Spannflächen auf Dauer seine Aufgabe nicht erfüllen, weil Durchmesseränderungen allein des Deckelflansches den Klemmring schrittweise bis zum Bruch aufweiten würden.

In der Zeichnung sind zwei Ausführungsbeispiele einer Deckelbefestigung für einen Wirbelkammer-Behälten gemäß der Erfindung dargestellt, und zwar zeigen

Fig. 1 einen teilweisen Querschnitt durch eine der kranzartig angeordneten Befestigungsschrauben, und

Fig. 2 einen teilweisen Querschnitt mit Klemmringbefestigung.

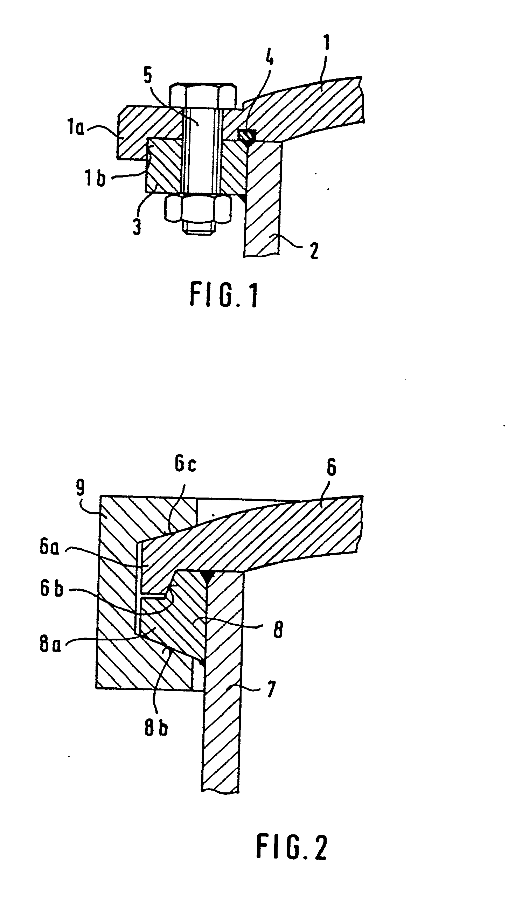

Nach Fig. 1 ist ein Behälterdeckel 1 mit dem oberen Rand der Behälterwandung 2, an der ein Ringflansch 3 angeschweißt ist, unter Zwischenlage einer Ringdichtung 4 mittels eines Kranzes von Befestigungsschrauben 5 verspannt. Der Deckel 1 ist randseitig mit einem Bund 1a versehen, der den Ringflansch 3 auf einem Teil seiner Dicke mit einer inneren Bundfläche 1b formschlüssig, d. h. mit einem möglichst geringen Spiel umgreift. Wenn sich bei einem hohen Innendruck im Behälter der Deckel 1 nach außen auswölbt, wodurch die Tendenz entsteht, daß sich der Lochkreisdurchmesser für die Schrauben 5 im Bereich des Deckelrandes verringert, so wird diese Durchmesserverringerung durch die Steifigkeit des Ringflansches 3 in dem Sinne aufgefangen, daß zwischen Ringflansch und Deckelrand keine Relativbewegung stattfindet. Biege- und Scherspannungen in den Schraubenschäften werden dadurch vermieden.

In Fig. 2 ist ein Deckel 6 mit dem oberen Rand einer Behälterwandung 7 über den angeschweißten Ringflansch 8 mittels eines geteilten Klemmringes 9 verspannt. Die dem Ringflansch 8 zugewandte Bundfläche 6b des Bundes 6a sowie die Gegenfläche des Ringflansches verlaufen nach außen leicht konisch, so daß bei diesem Ausführungsbeispiel die gerade bei Druckerhöhungen im Inneren des Behälters erhöhte Pressung zwischen der Bundfläche 6b und der Gegenfläche des Ringflansches 8 eine besondere Dichtung ersetzt. Der Ringflansch ist auf seiner nicht vom Deckelbund 6a umgriffenen Außenfläche mit einem bis zum Außendurchmesser des Bundes reichenden Ringvorsprung 8a versehen, und sowohl die Oberfläche des Deckelrandes als auch die Unterfläche des Ringflansches verlaufen als nach außen konvergierende Spannflächen 6c bzw. 8b, wodurch die Voraussetzungen dafür geschaffen sind, daß als Befestigungsmittel ein geteilter Klemmring 9 verwendet werden kann. Solche Klemmringe haben im Gegensatz zur Schraubenbefestigung den Vorteil, schnell und leicht gelöst werden zu können. Im vorliegenden Falle empfiehlt sich ein Klemmring mit mehr als zwei Gliedern, z. B. sechs Gliedern, damit die Glieder ihre Relativlage gegenüber etwaigen gemeinsamen Durchmesserveränderungen des Deckelrandes und des Ringflansches beibehalten, was um so mehr der Fall ist, je mehr Elastizitäten zwischen Kettengliedern im Bereich deren Gelenke vorhanden sind.

**Patentansprüche**

1. Wirbelkammer-Behälter eines Mörtelanwurfgerätes zur Aufbereitung von unter hohem Förderdruck stehendem Mörtel, mit einem Rührwerkzeug in dem Wirbelkammer-Behälter und mit einem Deckel, der mittels Befestigungsmittel mit einem behälterseitigen Ringflansch (3, 8) verbindbar ist, dadurch gekennzeichnet, daß der Deckel (1, 6) mit einem Bund (1a, 6a) versehen ist, der den Ringflansch mindestens auf einem Teil seiner Höhe derart formschlüssig umgreift, daß Deckelbund und behälterseitiger Ringflansch unter der aufgrund der Aufwölbung des Deckels unter dem hohen Förderdruck hervorgerufenen Verringerung des Durchmessers des Deckelbundes spielfrei verspannt sind, und das Befestigungsmittel aus einem Kranz von Spannschrauben oder einem geteilten Klemmring besteht.

2. Wirbelkammer-Behälter nach Anspruch 1, dadurch gekennzeichnet, daß die dem Ringflansch (8) zugewandte Bundfläche (6b) sowie die Gegenfläche des Ringflansches nach außen leicht konisch verlaufen.

3. Wirbelkammer-Behälter nach Anspruch 1 oder 2 für einen geteilten Klemmring als Befestigungsmittel, dadurch gekennzeichnet, daß der Ringflansch (8) auf seiner nicht vom Deckelbund (6a) umgriffener Außenfläche einen bis zum Außendurchmesser des Bundes reichenden Ringvorsprung (8a) hat, und daß sowohl die Oberfläche des Deckelrandes als auch die Unterfläche des Ringflansches als nach außen konvergierende Spannflächen (6c, 8b) für den geteilten Klemmring (9) verlaufen.

## Claims

1. A whirl chamber container of a mortar machine for the processing of mortar while subjected to a high feed pressure, with a stirring tool inside the whirl chamber container and with a lid which may be connected to an annular flange (3, 8) on the container by way of a fastening means, characterized in that the lid (1, 6) is provided with a collar (1a, 6a) which positively encompasses at least part of the height of the annular flange in such a manner that the lid collar and annular flange on the container are interclamped free from play when the diameter of the lid collar is caused to decrease by the lid arching under the effect of the high feed pressure, and in that the fastening means consists of annularly arranged tightening bolts or of a divided clamping ring.

2. A whirl chamber container according to Claim 1, characterized in that the collar area (6b) facing the annular flange (8) and the counter-area of the annular flange are slightly cone-shaped in the outward direction.

3. A whirl chamber container according to Claim 1 or 2 for a divided clamping ring as fastening means, characterized in that the external area of the annular flange (8) not encompassed by the lid collar (6a) comprises an annular projection (8a) extended to flush with the external diameter of the collar, and in that both the upper surface of the edge of the lid and the lower surface of the annular flange are shaped to form outwardly converging clamping surfaces (6c, 8b) for the divided clamping ring.

## Revendications

1.- Récipient à chambre à turbulence pour appareil d'alimentation en mortier destiné à la préparation d'un mortier placé sous haute pression, avec un outil de brassage dans le récipient à chambre à turbulence et un couvercle qui est relié, par des moyens de fixation, à une bride annulaire (3, 8) placée côté récipient, caractérisé en ce que le couvercle (1, 6) est pourvu d'une ceinture (1a, 6a) enveloppant, étroitement, au moins sur une partie de sa hauteur, la bride annulaire de telle sorte que la ceinture du couvercle et la bride côté récipient soit plaquées sans jeu sous la voûte du couvercle par l'effet de la réduction de diamètre due à la pression élevée et le système de fixation consiste en une couronne de vis de tension du un anneau de serrage en plusieurs parties.

2.- Récipient à chambre à turbulence suivant la revendication 1 caractérisé en ce que la surface (6b) de la ceinture tournée vers la bride annulaire (8) ainsi que les surfaces opposées de cette bride annulaire sont légèrement coniques vers l'extérieur.

3.- Récipient à chambre à turbulence suivant l'une quelconque des revendications 1 ou 2 comportant un anneau de serrage en plusieurs parties en tant que moyen de fixation, caractérisé en ce que la bride annulaire (8) comporte, sur sa surface externe qui n'est pas entourée par la ceinture (6a) du couvercle, une saillie annulaire (8a) s'étendant jusqu'au diamètre externe de la ceinture et aussi bien la surface supérieure du bord du couvercle que la surface inférieure de la bride annulaire s'étendent en formant des surfaces de tension (6c, 8b) convergeant vers l'extérieur pour l'anneau de serrage en plusieurs parties (9).

FIG.1

FIG.2